# EUROPÄISCHE PATENTSCHRIFT

(11) **EP 0 459 348 B1**
(45) Veröffentlichungstag und Bekanntmachung des Hinweises auf die Patenterteilung: **03.08.1994**
(21) Anmeldenummer: 91108574.4
(22) Anmeldetag: 27.05.1991
(51) Int. Cl.: C01F 11/46, C01B 17/42

(54) **Aufarbeitung von Rückständen der Barium- oder Strontiumsulfid-Laugerei**
Treatment of residues obtained during barium or strontium sulphide extraction
Traitement de matériaux résiduels obtenus pendant l'extraction de sulfures de barium ou strontium

(30) Priorität: 31.05.1990 DE 4017530
(43) Veröffentlichungstag der Anmeldung: 04.12.1991
(73) Patentinhaber: Kali-Chemie Aktiengesellschaft, D-30173 Hannover (DE)
(72) Erfinder: Jäger, Paul, W-5462 Bad Hönningen (DE); Riechers, Heinz-Hermann, W-5462 Bad Hönningen (DE); Köhler, Karl, W-3201 Diekholzen (DE); Wulff, Martin, W-5462 Bad Hönningen (DE)
(74) Vertreter: Lauer, Dieter, Dr.

(56) Entgegenhaltungen:
- DE-A- 3 213 517
- DE-B- 1 069 597
- FR-A- 2 098 269
- US-A- 2 285 242
- CHEMICAL ABSTRACTS, vol. 104, no. 6, Februar 1986, Columbus, Ohio, US; abstract no. 36324 P, K. SHONO ET AL. 'Fine barium sulfate containing no sulfide. ' Seite 140 ;
- CHEMICAL ABSTRACTS, vol. 79, no. 12, 24. September 1973, Columbus, Ohio, US; abstract no. 68257 A, R. SICKERT ET AL. 'Whitening barite floatation concentrates. ' Seite 112 ;

## Beschreibung

Die Erfindung betrifft ein Verfahren zur Aufarbeitung von Rückständen der Bariumsulfid-Laugerei oder der Strontiumsulfid-Laugerei.

Die Bariumsulfid-Laugerei ist ein Verfahrensschritt im Verlauf der Herstellung von Bariumverbindungen aus dem natürlich vorkommenden Ausgangsmaterial, nämlich Schwerspat (Baryt). Schwerspat enthält etwa 92 bis 98 Gew.-% Bariumsulfat und weiterhin wechselnde Mengen von Calcium- und Eisensalzen sowie Silikat. Der gemahlene Schwerspat wird mit feingemahlener Kohle vermischt und bei hohen Temperaturen (ca. 1200 °C) zu Bariumsulfid reduziert. Die abgekühlte, Bariumsulfid enthaltende Schmelze wird mit heißem Wasser unter Bildung von Bariumsulfid-Lauge extrahiert. Die durch diese Bariumsulfid-Laugerei gewonnene Bariumsulfid-Lauge ist ein Zwischenprodukt bei der Herstellung von verschiedensten organischen und anorganischen Bariumverbindungen. Zur Bildung dieser Verbindungen wird die Lauge weiter umgesetzt. So kann man beispielsweise durch Einleiten von Kohlendioxid Bariumcarbonat herstellen. Bariumcarbonat wird in der Glasindustrie verwendet.

Bei der Bariumsulfid-Laugerei verbleibt ein Rückstand. Dieser Rückstand enthält vorwiegend Bariumsalze, ferner Eisen- und Calciumsalze, insbesondere in Form der Silikate und Sulfide.

Der Herstellung von Bariumverbindungen aus Bariumsulfat vergleichbar ist die Herstellung von Strontiumverbindungen. Ausgangsmaterial ist hier das natürlich vorkommende Mineral Coelestin, das im wesentlichen aus Strontiumsulfat besteht. Die Gewinnung von Strontiumverbindungen aus diesem Mineral ist der oben beschriebenen Gewinnung von Bariumverbindungen vergleichbar. Der gemahlene Coelestin wird mit Kohle vermischt, bei hohen Temperaturen zu Strontiumsulfid reduziert und die abgekühlte Schmelze mit heißem Wasser extrahiert. Hierbei bildet sich eine Strontiumsulfidlauge. Diese bei der Strontiumsulfid-Laugerei gewonnene Strontiumsulfid-Lauge ist ein Zwischenprodukt bei der Herstellung verschiedenster Strontiumverbindungen. Der weitaus größte Teil dieser Lauge wird zu Strontiumcarbonat weiter umgesetzt, beispielsweise durch Einleiten von Kohlendioxid. Strontiumcarbonat wird im großen Maßstab für Fernsehbildröhren verwendet.

Auch bei der Strontiumsulfid-Laugerei verbleibt ein Rückstand.

Aufarbeitungsverfahren für die Aufarbeitung von Laugereirückständen der Bariumsulfid- bzw. Strontiumsulfid-Laugerei mit Salzsäure bzw. Schwefelwasserstoff sind bereits bekannt. Die DE-A 10 69 597 beschreibt die Extraktion des in Salzsäure löslichen Gehaltes an Barium aus Rückständen der Bariumsulfid-Laugerei. Der Barium in Form von Bariumchlorid enthaltende Extrakt enthält auch Eisensalze, Aluminiumsalze und Calciumsalze, die in einer Fällstufe vom extrahierten Bariumchlorid abgetrennt werden. Über eine Verwendbarkeit des nach der Salzsäureextraktion bleibenden, noch immer Barium enthaltenden Rückstands wird nichts ausgesagt.

Die FR-A-2 098 269 beschreibt die Aufarbeitung von Rückständen der Bariumsulfid-Laugerei mittels Schwefelwasserstoff. Auch bei diesem Verfahren geht nur ein Teil des im Rückstand noch enthaltenen Bariums in Lösung.

Aufgabe der Erfindung ist es, ein großtechnisch anwendbares, zweckmäßiges und einfaches Verfahren zur Aufarbeitung von Rückständen der Bariumsulfid-Laugerei oder der Strontiumsulfid-Laugerei anzugeben, das die teilweise oder vollständige Verwertung dieser Rückstände gestattet und die zu deponierende Menge an Rückstand verringert. Diese Aufgabe wird durch das erfindungsgemäße Verfahren gelöst.

Das erfindungsgemäße Verfahren zur Aufarbeitung von Rückständen der Bariumsulfid-Laugerei oder der Strontiumsulfid-Laugerei, bei welchem man die Rückstände mit Schwefelsäure unter Bildung einer Säurelösung und eines Feststoffes umsetzt und die Säurelösung vom Feststoff abtrennt, ist dadurch gekennzeichnet, daß man eine 25 bis 32 Gew.-% HCl enthaltende Salzsäure, eine 80 bis 100 Gew.-% H₂SO₄ enthaltende Schwefelsäure einsetzt und die Umsetzung der Laugerei-Rückstände mit Salzsäure und Schwefelsäure bei einer Temperatur zwischen 60 °C und der Siedetemperatur durchführt. Der abgetrennte Feststoff kann gewünschtenfalls mit Alkali aufgeschlossen werden. Die Säurelösung und den Feststoff kann man gewünschtenfalls neutralisieren und gewünschtenfalls entwässern.

Die Zugabe von Salzsäure und Schwefelsäure zu den Laugerei-Rückständen kann gleichzeitig erfolgen. Man kann dann eine Schwefelsäure enthaltende Salzsäure zugeben. Bevorzugt setzt man jedoch die Rückstände zunächst mit Salzsäure um und gibt danach die Schwefelsäure zu.

Die Schwefel- bzw. Salzsäure kann gewünschtenfalls Sulfat- oder Hydrogensulfatsalze, insbesondere von Alkalimetallen, enthalten. Vorzugsweise verzichtet man auf den Zusatz von Sulfatsalzen.

Die Menge an Sulfat bzw. an Schwefelsäure wird zweckmäßigerweise in mindestens der zur vollständigen Fällung des im Rückstand enthaltenen Bariums oder Strontiums als Barium- oder Strontiumsulfat notwendigen Menge eindosiert. Man kann zwar auch geringere Mengen an Sulfat bzw. Schwefelsäure einsetzen. Die Effektivität des erfindungsgemäßen Verfahrens ist dann geringer.

Sulfat bzw. Schwefelsäure können auch in größeren Mengen als stöchiometrisch zur Barium- oder Strontiumfällung notwendig eingesetzt werden. Besonders gute Ergebnisse werden erzielt, wenn man Schwefelsäure in der 1,02 bis 1,1-fachen stöchiometrisch notwendigen Menge eindosiert.

Technisch besonders vorteilhaft ist der Einsatz von konzentrierter Salzsäure, welche die Salzsäure in einer Konzentration von 30 bis 32 Gew.-% enthält, und von konzentrierter Schwefelsäure, welche die Schwefelsäure in einer Konzentration von 92 bis 97 Gew.-% enthält.

Die Salzsäure wird zweckmäßigerweise in mindestens der zur Auflösung des im Rückstand enthaltenen Calciums und Eisens stöchiometrisch notwendigen Menge dosiert. Die Effektivität ist geringer, wenn man unterstöchiometrische Mengen an Salzsäure einsetzt. Die Salzsäure kann aber auch in überstöchiometrischen Mengen eingesetzt werden. Besonders gute Ergebnisse werden erzielt, wenn die Salzsäure in der 1,01 bis 1,1-fachen der stöchiometrisch zur Auflösung des Calcium-und Eisengehalts im Rückstand notwendigen Menge eingesetzt wird.

Vorteilhafterweise werden die Reaktionskomponenten gut durchmischt.

Die Umsetzung des Laugereirückstandes mit Mineralsäure und der bevorzugt eingesetzten wäßrigen Schwefelsäure wird vorzugsweise bei Temperaturen zwischen 65 °C und 100 °C durchgeführt. Zusätzlich zu der, durch eine exotherme Reaktion freigesetzten Wärmeenergie kann man das Reaktionsgemisch entsprechend beheizen.

Die Zeitdauer der Umsetzungen zwischen Laugereirückstand und Salzsäure bzw. Schwefelsäure kann man in weitem Bereich variieren. Gute Erfolge werden erzielt, wenn man die Umsetzung über einen Zeitraum von insgesamt 15 min. bis 3 Stunden durchführt. Man kann die Umsetzung natürlich auch kürzer oder noch länger, bis hin zu 24 h und mehr, durchführen.

Aus apparativen Gründen arbeitet man bevorzugt bei Normaldruck (Umgebungsdruck). Bei Anwendung entsprechender Apparaturen kann man allerdings auch bei erniedrigtem oder bei erhöhtem Druck arbeiten.

Bei der Umsetzung des Laugerei-Rückstands mit Säure freiwerdender Schwefelwasserstoff, dessen Freisetzung durch Strippen noch erhöht werden kann, wird abgeleitet und kann beispielsweise auf Schwefel aufgearbeitet werden.

Bei der Umsetzung bildet sich im Reaktor eine Säurelösung und ein Feststoff. Nach der Umsetzung des Laugereirückstands mit Salzsäure und Schwefelsäure wird die Säurelösung vom Feststoff abgetrennt. Hierzu bedient man sich an sich bekannter Methoden. Man kann beispielsweise filtrieren, zentrifugieren oder dekantieren.

Der abgetrennte Feststoff, der noch mit Wasser gewaschen werden kann, besteht bei der Anwendung auf Bariumsulfid-Laugereirückstand im wesentlichen aus Bariumsulfat und Siliciumdioxid. Er kann filterfeucht oder gewünschtenfalls getrocknet verwendet werden. Insbesondere kann er in die Bariumsulfat-Reduktion rückgeführt werden. Gemäß einer noch zu beschreibenden Variante kann er auch weiter aufgearbeitet werden.

Bei der Anwendung auf Strontiumsulfidlaugerei-Rückstand besteht der Feststoff im wesentlichen aus Strontiumsulfat. Auch dieser Rückstand kann in die Sulfat-Reduktion rückgeführt oder weiter aufgearbeitet werden.

Die wäßrige Säurelösung enthält im wesentlichen die Eisen- und Calciumbestandteile des Laugereirückstands. Aufgrund der Verwendung von Salzsäure erhält man entsprechend eine wäßrige Lösung von Eisenchlorid und Calciumchlorid sowie den entsprechenden Sulfaten. Das gewünschtenfalls nach Einengen oder Trocknen der Lösung oder nach Abtrennen der Säure verbleibende Gemisch von Eisenchlorid und Calciumchlorid kann als Flockungsmittel oder als Fällmittel, beispielsweise für Phosphate, in der Abwasserreinigung verwendet werden.

In einer bevorzugten Ausführungsform des erfindungsgemäßen Verfahrens wird der bei der Säurebehandlung entstehende Feststoff, der im wesentlichen aus Bariumsulfat bzw. Strontiumsulfat und Siliciumdioxid besteht, noch weiter aufgearbeitet. Hierzu wird der Feststoff mit wäßriger Alkalilösung aufgeschlossen und lösliche Bestandteile dabei in Lösung gebracht. Es bildet sich eine alkalische Extraktlösung und ein Extraktionsrückstand.

Diese Ausführungsform ist dadurch gekennzeichnet, daß man den von der Säurelösung abgetrennten Feststoff mit wäßriger Alkalilösung unter Bildung einer alkalischen Extraktlösung und eines Extraktionsrückstandes aufschließt und die alkalische Extraktlösung vom Extraktionsrückstand abtrennt.

Die Konzentration der eingesetzten Alkalilösung kann zwar in einem weiten Bereich schwanken, z.B. zwischen 1 Gew.-% und der Sättigungsgrenze. Sie liegt vorteilhafterweise aber zwischen etwa 15 und 50 Gew.-%. Besonders geeignet ist Natronlauge.

Die Umsetzung des Feststoffes mit Alkalilösung beim Aufschluß ist zwar bei Temperaturen zwischen etwa 10 °C und dem Siedepunkt möglich. Sie wird bevorzugt aber oberhalb von etwa 50 °C, besonders bevorzugt zwischen etwa 80 °C und dem Siedepunkt der Reaktionsmischung durchgeführt.

Die Laugung mit Alkalilösung kann bei Normaldruck (1 atm) durchgeführt werden. Gewünschtenfalls kann man bei erhöhtem Druck, beispielsweise bei einem Druck bis zu 5 Bar, und einer Temperatur von bis zu 160 °C oder höher arbeiten. Man verwendet dann druckfeste Apparaturen (Autoklaven). Unter Anwendung geeigneter Apparaturen kann man auch bei noch höheren Drücken als 5 Bar und höheren Temperaturen als 160 °C arbeiten.

Die alkalische Extraktlösung enthält nach der Umsetzung das Siliciumdioxid in Form von gelöstem Natriumsilikat. Die alkalische Lösung wird nach bekannten Methoden, beispielsweise durch Filtrieren, Zentrifugieren oder Dekantieren, vom alkaliunlöslichem Feststoff, der im wesentlichen aus Bariumsulfat bzw. aus Strontiumsulfat besteht, abgetrennt.

Die Alkalisilikat enthaltende alkalische Lösung kann als Wasserglaslösung oder, gewünschtenfalls nach Trocknen, zur Herstellung von Kieselgel verwendet werden. Der alkaliunlösliche Feststoff kann, gewünschtenfalls nach Trocknen, in die jeweilige Sulfatreduktion rückgeführt werden.

Das erfindungsgemäße Verfahren ermöglicht es in dieser Variante somit, den Rückstand der Bariumsulfid-Laugerei bzw. den Rückstand der Strontiumsulfid-Laugerei vollständig zu verwerten.

Sofern an der Verwertung der eisen- und calciumhaltigen Säurelösung oder der Alkalisilikatlösung kein Bedarf besteht, kann man die betreffende Lösung natürlich auch neutralisieren, mehr oder weniger trocknen und den erhaltenen Rückstand der Deponie zuführen.

Sofern weder an der Verwertung der eisen- und calciumhaltigen Säurelösung noch an der Verwertung der Alkalisilikatlösung Interesse besteht, vereinigt man vorteilhafterweise beide Lösungen. Gewünschtenfalls wird neutralisiert und der erhaltene Rückstand der Deponierung zugeführt. Der Rückstand kann filterfeucht oder mehr oder weniger getrocknet deponiert werden.
Diese vorteilhafte Ausführungsform des erfindungsgemäßen Verfahrens ist dadurch gekennzeichnet, daß man eine etwa 25 bis 32 Gew.-% HCl enthaltende Salzsäure, eine etwa 80 bis 100 Gew.-% H₂SO₄ enthaltende Schwefelsäure einsetzt, die Umsetzung der Laugerei-Rückstände mit Salzsäure und Schwefelsäure bei einer Temperatur zwischen 60 °C und der Siedetemperatur durchführt, daß man den von der Säurelösung abgetrennten Feststoff mit wäßriger Alkalilösung unter Bildung einer alkalischen Extraktlösung und eines Extraktionsrückstandes aufschließt, die alkalische Extraktlösung vom Extraktionsrückstand abtrennt und die abgetrennte Säurelösung mit der abgetrennten Extraktlösung vereinigt und neutralisiert und entwässert.

Selbst bei dieser Ausführungsform des erfindungsgemäßen Verfahrens, bei welcher man nur den Barium- oder Strontiumgehalt der Laugereirückstände verwertet, ist die zu deponierende Menge noch immer stark reduziert, nämlich um bis zu 90 Gew.-%.

Entsprechend dem erfindungsgemäßen Verfahren gelingt es somit auf technisch zweckmäßige und einfache Weise, den bei der Laugerei von Bariumsulfid bzw. Strontiumsulfid anfallenden Rückstand zum größten Teil oder auch vollständig wiederzuverwerten und die zu deponierende Menge zu reduzieren.

Das folgende Beispiel soll das erfindungsgemäße Verfahren weiter erläutern, ohne es in seinem Umfang einzuschränken. Die Prozentangaben beziehen sich auf Gewichtsprozent.

### Beispiel

8,9 t feuchter Laugereirückstand mit ca 55 % H₂O wurden in einem beheizten Rührbehälter mit 3,8 t H₂O angemischt. Unter Rühren wurden 750 kg HCl (32 %) und 880 kg H₂SO₄ (96 %) zugesetzt. Der entstehende Schwefelwasserstoff wurde in einem Gaswäscher mit BaS-Lauge absorbiert.

Nach 2 Stunden Rühren bei 70 °C wurde die Suspension über eine Filterpresse abfiltriert. Es wurden 6,9 t Filterkuchen mit 30 % H₂O erhalten. Er wurde mit 160 l Wasser gewaschen und anschließend nach Zusatz von 570 kg NaOH (30 %) 3 Stunden bei 90 °C gerührt. Die Suspension wurde über eine Filterpresse filtriert. Der anfallende Filterkuchen (40 % H₂O) enthielt 4,2 t Trockenmasse mit ca. 94,5 % BaSO₄, 1,6 % SrSO₄, 0,72 % SiO₂, 0,8 % Fe₂O₃, 0,4 % CaO.

Das Produkt entsprach einem hochangereicherten Schwerspat und wurde in den Drehofenprozeß zur BaS-Herstellung eingesetzt.

Die gesammelten, mit den jeweiligen Waschwässern vereinigten Filtrate aus den beiden Filtrationsschritten wurden in einem Rührbehälter vermischt. Durch Zugabe von NaOH wurde die Suspension auf pH = 7 eingestellt und danach über eine Filterpresse entwässert. Es wurden 2,8 t stichfester, feuchter Filterkuchen mit 75 % H₂O erhalten. Die Trockenmasse bestand überwiegend aus Eisen(III)-oxid, Calciumoxid, Siliciumdioxid und Aluminiumoxid.

Dieser Reststoff kann problemlos deponiert werden.

Gegenüber dem in den Prozeß eingesetzten Rückstand wurde die abzulagernde Stoffmenge, bezogen auf Trockenmasse, um 82,5 % vermindert.

## Patentansprüche

1. Verfahren zur Aufarbeitung von Rückständen der Bariumsulfid-Laugerei oder der Strontiumsulfid-Laugerei, wobei man die Rückstände mit Salzsäure und Schwefelsäure unter Bildung einer Säurelösung und eines Feststoffes umsetzt und die Säurelösung vom Feststoff abtrennt, dadurch gekennzeichnet, daß man eine 25 bis 32 Gew.-% HCl enthaltende Salzsäure, eine 80 bis 100 Gew.-% H₂SO₄ enthaltende Schwefelsäure einsetzt und die Umsetzung der Laugerei-Rückstände mit Salzsäure und Schwefelsäure bei einer Temperatur zwischen 60 °C und der Siedetemperatur durchführt.

2. Verfahren nach Anspruch 1, dadurch gekennzeichnet, daß man bei einer Temperatur zwischen 65 °C und 100 °C arbeitet.

3. Verfahren nach Anspruch 1, dadurch gekennzeichnet, daß man den von der Säurelösung abgetrennten Feststoff mit wäßriger Alkalilösung unter Bildung einer alkalischen Extraktlösung und eines Extraktionsrückstandes aufschließt und die alkalische Extraktlösung vom Extraktionsrückstand abtrennt.

4. Verfahren nach Anspruch 3, dadurch gekennzeichnet, daß man als wäßrige Alkalilösung eine wäßrige Natronlauge einsetzt die Natriumhydroxid in einer Menge von 1 Gew.-% bis hin zur Sättigungsgrenze, vorzugsweise 15 bis 50 Gew.-%, enthält.

## Claims

1. Process for the working-up of waste materials from barium sulphide leaching or strontium sulphide leaching, in which the waste material is reacted with hydrochloric acid and sulphuric acid to form an acid solution and a solid and the acid solution is separated off from the solid, characterised in that a hydrochloric acid containing 25 to 32 % by weight of HCl and a sulphuric acid containing 80 to 100 % by weight of H₂SO₄ are used and the reaction of the leaching residues with hydrochloric acid and sulphuric acid is carried out at a temperature of between 60 °C and the boiling point.

2. Process according to claim 1, characterised in that it is carried out at a temperature of between 65 °C and 100 °C.

3. Process according to claim 1, characterised in that the solid separated off from the acid solution is treated with an aqueous alkali solution to form an alkaline extract solution and an extraction residue and the alkaline extract solution is separated off from the extraction residue.

4. Process according to claim 3, characterised in that the aqueous alkali solution used is an aqueous sodium hydroxide solution containing sodium hydroxide in a quantity of between 1 % by weight and the saturation limit, preferably 15 to 50 % by weight.

## Revendications

1. Procédé pour le traitement des résidus de l'extraction du sulfure de baryum ou de l'extraction du sulfure de strontium, dans lequel on fait réagir les résidus avec de l'acide chlorhydrique et de l'acide sulfurique avec formation d'une solution acide et d'une matière solide et sépare la solution acide de la matière solide, caractérisé en ce qu'on met en oeuvre un acide chlorhydrique contenant 25 à 32% en poids d'HCl, un acide sulfurique contenant 80 à 100% en poids d'H₂SO₄ et effectue la réaction des résidus d'extraction avec l'acide chlorhydrique et l'acide sulfurique à une température entre 60°C et la température d'ébullition.

2. Procédé selon la revendication 1, caractérisé en ce qu'on opère à une température entre 65°C et 100°C.

3. Procédé selon la revendication 1, caractérisé en ce qu'on attaque la matière solide séparée de la solution acide avec une solution alcaline aqueuse avec formation d'une solution d'extrait alcalin et d'un résidu d'extraction et sépare la solution d'extrait alcalin du résidu d'extraction.

4. Procédé selon la revendication 3, caractérisé en ce qu'on met en oeuvre comme solution alcaline aqueuse une lessive de soude aqueuse contenant de l'hydroxyde de sodium en une quantité allant de 1% en poids jusqu'à la limite de saturation, de préférence de 15 à 50% en poids.
